# EUROPÄISCHE PATENTSCHRIFT

(11) **EP 2 729 287 B1**
(45) Veröffentlichungstag und Bekanntmachung des Hinweises auf die Patenterteilung: **24.06.2020**
(21) Anmeldenummer: 12734809.2
(22) Anmeldetag: 05.07.2012
(51) Int. Cl.: B29B 9/06, B29B 9/14, B29C 48/04

(54) **VERFAHREN ZUM HERSTELLEN VON GRANULATKÖRNERN**
METHOD FOR MAKING GRANULES
PROCÉDÉ DESTINÉS À FABRIQUER DES GRANULÉS

(30) Priorität: 06.07.2011 DE 102011106709
(43) Veröffentlichungstag der Anmeldung: 14.05.2014
(73) Patentinhaber: Maag Automatik GmbH, 63762 Großostheim (DE)
(72) Erfinder: SCHEURICH, Jochen, 63843 Niedernberg (DE)
(74) Vertreter: Puschmann Borchert Bardehle Patentanwälte Partnerschaft mbB
(86) Internationale Anmeldenummer: PCT/EP2012/002833
(87) Internationale Veröffentlichungsnummer: WO 2013/004390

(56) Entgegenhaltungen:
- WO-A1-2009/091073
- WO-A1-2010/140310
- DE-A1-102006 058 811
- DE-A1-102009 059 306

## Beschreibung

Die Erfindung betrifft ein Verfahren zum Herstellen von Granulatkörnern gemäß dem Oberbegriff des Anspruchs 1.

Generell werden zur Granulierung von thermoplastischem Kunststoffmaterial, wie z.B. Polyamid, welches z.B. Glasfaser verstärkt sein kann, häufig Granuliervorrichtungen eingesetzt, bei welchen Stränge einer Schmelze des thermoplastischen Kunststoffmaterials nach der Erzeugung und Bereitstellung der Schmelze des thermoplastischen Kunststoffmaterials in mehreren Strängen aus einer Lochplatte bzw. aus den dortigen Düsenöffnungen, austreten, die so erzeugten Stränge gekühlt werden und die Stränge dann in einzelne Granulatkömer zerteilt werden. Entsprechende Vorrichtungen sind als Stranggranulierungsanlagen beispielsweise vom Unternehmen Automatik Plastics Machinery GmbH bekannt.

Bei solchen Vorrichtungen und Verfahren kann es insbesondere im Bereich des Schmelzeaustritts aus der Lochplatte dort zu Verfestigungen und somit zu Verklumpungen der Schmelze dort kommen, so dass die Stränge dort sogar abreißen können. Auch können so unerwünschte Ablagerungen in der Umgebung der Düsenöffnungen entstehen, welche den Strangaustritt dort stören können.

Das Dokument WO 2010/140310 A1 offenbart den Oberbegriff des Anspruchs 1 und beschreibt ein Verfahren und eine Vorrichtung zur Extrusion von Schmelzematerial, wobei über Gasauslässe, welche jeweils die Düsenöffnungen zum Auslass des Schmelzematerials dort umgeben, ein Gas im Bereich der Düsenöffnungen dort zugeführt wird.

Das Dokument WO 2009/091073 A1 beschreibt ein Verfahren und eine Vorrichtung zum Stranggranulieren, bei welcher eine Anströmdüsenanordnung mittels eines Schwenkgelenks bezüglich der dortigen Lochplatte verschwenkbar gelagert ist.

Es ist somit die Aufgabe der vorliegenden Erfindung, ein Verfahren zum Herstellen von Granulatkörnern aus einer Schmelze vorzusehen, welches die Nachteile des Standes der Technik überwindet und insbesondere ein solches Verfahren vorzusehen, welches konstruktiv einfach und möglichst kostengünstig eine Materialablagerung und somit ein Verklumpen und/oder einen dadurch bedingten Abriss von Schmelzesträngen einfach und zuverlässig erfindungsgemäß verhindert und so eine möglichst zuverlässige und störungsarme Herstellung von Granulatkörnern erfindungsgemäß ermöglicht.

Die erfindungsgemäße Aufgabe wird gelöst durch ein Verfahren zum Herstellen von Granulatkörnern mit den Merkmalen gemäß Anspruch 1. Bevorzugte Ausführungsformen sind in den jeweiligen abhängigen Ansprüchen definiert.

Das erfindungsgemäße Verfahren dient zum Herstellen von Granulatkörnern aus Strängen aus einer Schmelze eines thermoplastischen Kunststoffmaterials und weist die folgenden Schritte auf: Erzeugung und Bereitstellung der Schmelze des thermoplastischen Kunststoffmaterials, Austritt des thermoplastischen Kunststoffmaterials in mehreren Strängen aus einer Lochplatte, Anströmen der Stränge mit einem Anströmfluid aus einer Anströmdüse, Kühlen der Stränge und Zerteilen der Stränge in einzelne Granulatkörner. Erfindungsgemäß werden die Stränge nur beim Austritt aus der Lochplatte von dem Anströmfluid angeströmt, wobei das Anströmfluid beim Austritt aus der Anströmdüse eine Temperatur oberhalb der Schmelztemperatur des Kunststoffmaterials aufweist und eine Austrittsgeschwindigkeit im Bereich von 50 m/sek bis 300 m/sek aufweist. Bevorzugt kann das Anströmfluid eine Austrittsgeschwindigkeit im Bereich von 100 m/sek bis 250 m/sek, bevorzugter im Bereich von 150 m/sek bis 200 m/sek aufweisen. Erfindungsgemäß ist durch die so erreichbare gezielte und ausreichend kräftige (für die Entfernung/Vermeidung von Ablagerungen) aber gleichzeitig sanfte (für die Vermeidung der Abtrennung der Stränge) Anströmung auf einfache Weise möglich, dass Ablagerungen so rein mechanisch durch die entsprechende Strömung des Anströmfluids erfindungsgemäß gezielt vermieden bzw. entfernt werden können.

Gemäß einer bevorzugten Ausführungsform des erfindungsgemäßen Verfahrens tritt das Anströmfluid in einer Menge von 1,5 m³/h bis 9 m³/h, bevorzugt in einer Menge von 2 m³/h bis 8 m³/h, bevorzugter in einer Menge von 5 m³/h bis 7 m³/h jeweils pro 100 mm Breite der Anströmdüse aus der Anströmdüse mit einer Spalthöhe von 0,5 mm aus. Die genannten Mengen ermöglichen so ein effizientes Anströmen, ohne dass es zu einer zu hohen Strömungsbeaufschlagung kommt, welche zu einem Abtrennen der Stränge führen könnte.

Die Temperatur des Anströmfluids liegt erfindungsgemäß bevorzugt im Bereich von 10 °C bis 120 °C, bevorzugter im Bereich von 50 °C bis 80 °C, über der Schmelztemperatur des Kunststoffmaterials. Somit kann das Schmelzematerial ohne durch Abkühlung im Bereich des Strangaustritts aus der Lochplatte weiter zum Verklumpen zu neigen, besonders effizient dort schon durch die Erwärmung an der Anlagerung gehindert werden und/oder so auch dort entstehende Ablagerungen besonders effizient dort durch die Anströmung entfernt werden. Dann allerdings können die Stränge in Folge z.B. auf der Oberfläche eines Förderbandes abgelegt werden und/oder dort vor der Zerteilung in die Granulatkörner effektiv gekühlt und zumindest an der jeweiligen Strangoberfläche verfestigt werden.

Die Lage der Anströmdüse bezüglich den aus der Lochplatte austretenden Strängen kann durch Verschwenken der Anströmdüse gegen die Lochplatte mittels eines Schwenkgelenks erfindungsgemäß bevorzugt so verstellbar sein, dass sich der Strom des Anströmfluids auf den Bereich des Austritts der Stränge aus der Lochplatte bei diesem Verschwenken allenfalls entsprechend in seiner Richtung ändert.

Zweckmäßig werden die Stränge beim Austritt aus der Lochplatte im Querstrom oder Gegenstrom von dem Anströmfluid angeströmt.

Das Anströmfluid ist erfindungsgemäß bevorzugt ein Fluid aus der Gruppe erwärmte Luft, Inertgas, bevorzugt Stickstoff.

Eine Vorrichtung zum Herstellen von Granulatkörnern aus Strängen aus einer Schmelze eines thermoplastischen Kunststoffmaterials weist eine Schmelzeerzeugungsvorrichtung zur Erzeugung der Schmelze des thermoplastischen Kunststoffmaterials, eine Lochplatte, aus welcher das thermoplastische Kunststoffmaterial in mehreren Strängen austritt, eine Anströmvorrichtung mit einer Anströmdüse, aus welcher die Stränge mit einem Anströmfluid angeströmt werden, und eine Zerteilungsvorrichtung zum Zerteilen der Stränge in einzelne Granulatkörner auf, wobei die Anströmvorrichtung mittels eines Schwenkgelenks bezüglich der Lochplatte schwenkbar so angeordnet ist, dass die Stränge nur im Bereich des Austritts aus der Lochplatte anströmbar sind, und wobei das Schwenkgelenk bevorzugt im Bereich der Lochplatte angeordnet ist. Es ist durch die so erreichbare flexible Ausrichtung der Anströmvorrichtung auf einfache Weise ein gezieltes Anströmen der Stränge im Bereich der Lochplatte möglich, so dass dort Ablagerungen gezielt vermieden bzw. entfernt werden können.

Bevorzugt weist das Schwenkgelenk einen Schwenkbereich α auf, so dass die Stränge im Bereich der Lochplatte besonders effektiv im Querstrom oder im Gegenstrom anströmbar sind.

Bevorzugt weist das Schwenkgelenk ferner eine Drehachse im Abstand R vom Bereich des Austritts der Stränge angeordnet auf.

Die Anströmdüse ist bevorzugt eine Schlitzdüse und die Lochplatte weist Düsenöffnungen auf, aus welchen die Stränge jeweils austreten, wobei die einzelnen Düsenöffnungen jeweils den gleichen Abstand zu der Schlitzdüse aufweisen, und wobei dieser Abstand bevorzugt im Bereich von 5 mm bis 30 mm liegt und bevorzugter im Bereich von 10 mm bis 25 mm. Es können sich so besonders effizient gleichmäßige Strömungsverhältnisse der Anströmung einstellen, so dass ein Abreißen der Stränge dadurch weiter vermieden werden kann.

Generell gelten alle Vorteile/Merkmale, welche im Zusammenhang mit dem erfindungsgemäßen Verfahren angegeben sind, auch, soweit anwendbar, hinsichtlich der Vorrichtung bzw. umgekehrt. Die Vorrichtung kann bevorzugt das erfindungsgemäße Verfahren ausführen.

Die Erfindung wird im Folgenden anhand der beigefügten Figur näher beispielhaft erläutert werden. Es zeigt:

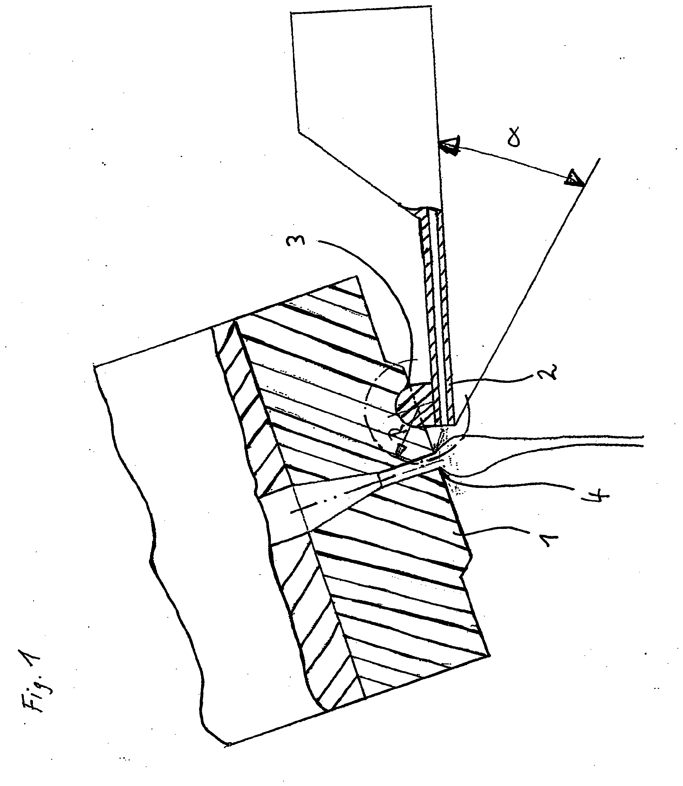

- Fig. 1: schematisch eine teilweise geschnittene Ansicht einer bevorzugten Ausführungsform der Vorrichtung.

Figur 1 zeigt schematisch eine teilweise geschnittene Ansicht einer bevorzugten Ausführungsform einer Vorrichtung zum Herstellen von Granulatkörnern aus Strängen aus einer Schmelze eines thermoplastischen Kunststoffmaterials mit einer Schmelzeerzeugungsvorrichtung zur Erzeugung der Schmelze des thermoplastischen Kunststoffmaterials (in Figur 1 nicht gezeigt), einer Lochplatte 1 mit Düsenöffnungen 4, aus welchen das thermoplastische Kunststoffmaterial jeweils in mehreren Strängen austritt, einer Anströmvorrichtung mit einer Anströmdüse 2, aus welcher die Stränge mit einem Anströmfluid angeströmt werden, und einer Zerteilungsvorrichtung zum Zerteilen der Stränge in einzelne Granulatkörner (in Figur 1 ebenfalls nicht gezeigt). Gemäß der in Figur 1 gezeigten bevorzugten Ausführungsform ist die Anströmvorrichtung mittels eines Schwenkgelenks 3, welches im Bereich der Lochplatte 1 angeordnet ist, bezüglich der Lochplatte 1 schwenkbar so angeordnet, dass die Stränge nur im Bereich des Austritts aus der Lochplatte anströmbar sind. Das Schwenkgelenk 3 weist dabei eine Drehachse auf, welche im Abstand R vom Bereich des Austritts der Stränge und bevorzugt im Bereich der Lochplatte 1 bzw. der Oberfläche davon angeordnet ist. So weist das Schwenkgelenk einen Schwenkbereich mit einem Schwenkwinkel α auf, welcher es ermöglicht, dass die Stränge im Bereich der Lochplatte 1 im Querstrom oder im Gegenstrom anströmbar sind. Die Anströmdüse 2 ist bevorzugt eine Schlitzdüse und die einzelnen Düsenöffnungen 4 der Lochplatte 1 weisen bevorzugt jeweils den gleichen Abstand zu der Schlitzdüse auf, wobei dieser Abstand im Bereich von 5 mm bis 30 mm liegt, und die Anordnung der Düsenöffnungen 4 und der Anströmdüse 2 kann dabei bevorzugt gradlinig entsprechend parallel zueinander ausgerichtet sein.

Mit der Vorrichtung kann das erfindungsgemäße Verfahren zum Herstellen von Granulatkörnern aus Strängen aus einer Schmelze eines thermoplastischen Kunststoffmaterials ausgeführt werden mit den Schritten der Erzeugung und Bereitstellung der Schmelze des thermoplastischen Kunststoffmaterials, dem Austritt des thermoplastischen Kunststoffmaterials in mehreren Strängen aus der Lochplatte 1, dem Anströmen der Stränge mit einem Anströmfluid aus der Anströmdüse 2, dem Kühlen der Stränge und dem anschließenden Zerteilen der Stränge in einzelne Granulatkörner, wobei die Stränge nur beim Austritt aus der Lochplatte 1 erfindungsgemäß von dem Anströmfluid angeströmt werden, und wobei das Anströmfluid beim Austritt aus der Anströmdüse 2 eine Temperatur oberhalb der Schmelztemperatur des Kunststoffmaterials aufweist und eine Austrittsgeschwindigkeit im Bereich von 50 m/sek bis 300 m/sek aufweist.

Beispielsweise wurden im Technikum der Anmelderin versuchsweise mit der Vorrichtung unter Ausführung des erfindungsgemäßen Verfahrens Granulatkörner aus glasfaserverstärktem Polyamid Kunststoffmaterial aus einer entsprechenden Schmelze hergestellt, wobei die Düsenbreite der als Schlitzdüse ausgebildeten Anströmdüse 100 mm betrug bei einer Spalthöhe von 0,5 mm über die gesamte Düsenbreite. Die Menge des Anströmfluids (im Beispiel: erwärmte Luft mit einer Temperatur von 450 °C an der Anströmdüse) betrug etwa 5 m³/h bis etwa 8 m³/h, so dass Anlagerungen entsprechend erfindungsgemäß entfernt wurden bzw. sich gar nicht bilden konnten.

## Patentansprüche

1. Verfahren zum Herstellen von Granulatkörnern aus Strängen aus einer Schmelze eines thermoplastischen Kunststoffmaterials mit den Schritten der Erzeugung und Bereitstellung der Schmelze des thermoplastischen Kunststoffmaterials, dem Austritt des thermoplastischen Kunststoffmaterials in mehreren Strängen aus einer Lochplatte (1), Anströmen der Stränge mit einem Anströmfluid aus einer Anströmdüse (2), Kühlen der Stränge und dem Zerteilen der Stränge in einzelne Granulatkörner, wobei die Stränge nur beim Austritt aus der Lochplatte (1) von dem Anströmfluid angeströmt werden, wobei das Anströmfluid beim Austritt aus der Anströmdüse (2) eine Austrittsgeschwindigkeit im Bereich von 50 m/sek bis 300 m/sek aufweist,
**dadurch gekennzeichnet, dass**
das Anströmfluid beim Austritt aus der Anströmdüse (2) eine Temperatur oberhalb der Schmelztemperatur des Kunststoffmaterials aufweist.

2. Verfahren nach Anspruch 1, **dadurch gekennzeichnet, dass** das Anströmfluid bevorzugt eine Austrittsgeschwindigkeit im Bereich von 100 m/sek bis 250 m/sek, bevorzugter im Bereich von 150 m/sek bis 200 m/sek aufweist.

3. Verfahren nach Anspruch 1 oder 2, **dadurch gekennzeichnet, dass** das Anströmfluid in einer Menge von 1,5 m³/h bis 9 m³/h, bevorzugt in einer Menge von 2 m³/h bis 8 m³/h, bevorzugter in einer Menge von 5 m³/h bis 7 m³/h jeweils pro 100 mm Breite der Anströmdüse (2) aus der Anströmdüse (2) mit einer Spalthöhe von 0,5 mm austritt.

4. Verfahren nach einem der Ansprüche 1 bis 3, **dadurch gekennzeichnet, dass** die Temperatur des Anströmfluids im Bereich von 10 °C bis 120 °C, bevorzugt im Bereich von 50 °C bis 80 °C, über der Schmelztemperatur des Kunststoffmaterials liegt.

5. Verfahren nach einem der Ansprüche 1 bis 4, **dadurch gekennzeichnet, dass** die Lage der Anströmdüse (2) bezüglich den aus der Lochplatte (1) austretenden Strängen durch Verschwenken der Anströmdüse (2) gegen die Lochplatte (1) mittels eines Schwenkgelenks (3) so verstellbar ist, dass sich der Strom des Anströmfluids auf den Bereich des Austritts der Stränge aus der Lochplatte (1) bei diesem Verschwenken allenfalls entsprechend in seiner Richtung ändert.

6. Verfahren nach einem der Ansprüche 1 bis 5, **dadurch gekennzeichnet, dass** die Stränge beim Austritt aus der Lochplatte (1) im Querstrom oder Gegenstrom von dem Anströmfluid angeströmt werden.

7. Verfahren nach einem der Ansprüche 1 bis 6, **dadurch gekennzeichnet, dass** das Anströmfluid ein Fluid aus der Gruppe erwärmte Luft, Inertgas, bevorzugt Stickstoff, ist.

## Claims

1. Method for producing granules from strands made of a melt of a thermoplastic material, including the following steps: producing and providing the melt of said thermoplastic material, exiting of the thermoplastic material in a plurality of strands from a perforated plate (1), an inflow fluid from an inflow nozzle (2) flowing against the strands, cooling the strands and dividing the strands into individual granules, wherein the inflow fluid only flows against the strands only upon exiting the perforated plate (1), wherein the inflow fluid exiting the inflow nozzle (2) has an exit velocity in the range from 50 m/sec to 300 m/sec, **characterised in that**
the inflow fluid exiting the inflow nozzle (2) has a temperature above the melting temperature of the plastic material.

2. Method according to claim 1, **characterised in that** the inflow fluid preferably has an exit velocity in the range from 100 m/sec to 250 m/sec, more preferably in the range from 150 m/sec to 200 m/sec.

3. Method according to claim 1 or 2, **characterised in that** the inflow fluid exits the inflow nozzle (2) at a gap height of 0.5 mm at an amount of 1.5 m³/h to 9 m³/h, preferably at an amount of 2 m³/h to 8 m³/h, more preferably at an amount of 5 m³/h to 7 m³/h per 100 mm width of the inflow nozzle (2).

4. Method according to one of claims 1 to 3, **characterised in that** the temperature of the inflow fluid is in the range from 10°C to 120°C, preferably in the range from 50°C to 80°C, above the melting temperature of the plastic material.

5. Method according to one of claims 1 to 4, **characterised in that** the position of the inflow nozzle (2) with respect to the strands exiting the perforated plate (1) can be adjusted by pivoting the inflow nozzle (2) against the perforated plate (1) by means of a swivel joint (3) such that, during said pivoting, the flow of the inflow fluid onto the region where the strands exit the perforated plate (1) is only appropriately changed respecting the direction of said flow.

6. Method according to one of claims 1 to 5, **characterised in that**, upon exiting the perforated plate (1), the inflow fluid flows against the stands in a cross flow or counter flow.

7. Method according to one of claims 1 to 6, **characterised in that** the inflow fluid is a fluid from the group including heated air, inert gas and, preferably, nitrogen.

## Revendications

1. Procédé pour la fabrication de granulés à partir de joncs provenant d'une masse fondue d'une matière synthétique thermoplastique avec les étapes de production et mise à disposition de la masse fondue de la matière synthétique thermoplastique, sortie de la matière synthétique thermoplastique en plusieurs joncs d'une filière (1), soufflage sur les joncs avec un fluide de soufflage provenant d'une buse de soufflage (2), refroidissement des joncs et fractionnement des joncs en granulés individuels, où les joncs ne subissent le soufflage par le fluide de soufflage que lors de la sortie de la filière (1), où le fluide de soufflage présente lors de la sortie de la buse de soufflage (2) une vitesse de sortie dans le domaine de 50 m/s à 300 m/s, **caractérisé en ce que** le fluide de soufflage lors de la sortie de la buse de soufflage (2) présente une température supérieure à la température de fusion de la matière synthétique.

2. Procédé selon la revendication 1, **caractérisé en ce que** le fluide de soufflage présente de préférence une vitesse de sortie dans le domaine de 100 m/s à 250 m/s, de préférence dans le domaine de 150 m/s à 200 m/s.

3. Procédé selon la revendication 1 ou 2, **caractérisé en ce que** le fluide de soufflage sort de la buse de soufflage (2) avec une hauteur d'interstice de 0,5 mm en une quantité de 1,5 m³/h à 9 m³/h, de préférence en une quantité de 2 m³/h à 8 m³/h, de préférence en une quantité de 5 m³/h à 7 m³/h, dans chaque cas pour 100 mm de largeur de la buse de soufflage (2).

4. Procédé selon l'une des revendications 1 à 3, **caractérisé en ce que** la température du fluide de soufflage est située dans le domaine de 10°C à 120°C, de préférence dans le domaine de 50°C à 80°C, au-dessus de la température de fusion de la matière synthétique.

5. Procédé selon l'une des revendications 1 à 4, **caractérisé en ce que** la position de la buse de soufflage (2) par rapport aux joncs sortant de la filière (1) peut être réglée par pivotement de la buse de soufflage (2) contre la filière (1) au moyen d'une articulation de pivotement (3) de telle manière que, lors de ce pivotement, le courant du fluide de soufflage sur le domaine de la sortie des joncs de la filière (1) est modifié tout au plus concernant sa direction.

6. Procédé selon l'une des revendications 1 à 5, **caractérisé en ce que** les joncs subissent le soufflage par le fluide de soufflage lors de la sortie de la filière (1) transversalement ou à contre-courant.

7. Procédé selon l'une des revendications 1 à 6, **caractérisé en ce que** le fluide de soufflage est un fluide du groupe air chauffé, gaz inerte, de préférence azote.
